# EUROPÄISCHE PATENTANMELDUNG

(11) **EP 1 647 392 A2**
(43) Veröffentlichungstag der Anmeldung: **19.04.2006**
(21) Anmeldenummer: 05020210.0
(22) Anmeldetag: 16.09.2005
(51) Int. Cl.: B29C 65/40, B29C 47/12, B29K 27/12, B29K 27/18

(54) **Schweissschuh; Kunststoffschweissextruder; Verfahren zur Erzeugung einer Kunststoffschweissnaht**

(30) Priorität: 12.10.2004 DE 102004049811; 12.10.2004 DE 102004049793
(71) Anmelder: Herz, Franz-Josef, 56566 Neuwied (DE)
(72) Erfinder: Herz, Franz-Josef, 56566 Neuwied (DE)
(74) Vertreter: Schuster, Müller & Partner

(57) **Zusammenfassung**

Es werden ein Schweißschuh (9), ein Kunststoffschweißextruder (1), der eine Fördereinrichtung (6), ein Gehäuse der Fördereinrichtung, eine Schmelzkammer (7), einen Schweißschuh (9) und/oder eine Düseneinrichtung aufweist, und ein Verfahren zur Erzeugung einer Kunststoffschweißnaht mittels eines Kunststoffschweißextuders (1) vorgeschlagen, wobei als Werkstoff mindestens teilweise Keramik verwendet, wird, wodurch Verunreinigungen des Schmelzgutes und ein Verschleiß vermieden werden und eine Erhöhung der Massetemperatur möglich wird, sodass auch hochfluorierte Kunststoffe (PTFE (Teflon), FEP (Hexafluorpropylen-Copolymer), PFA (Perfluoro-Alkoxyalkan), odgl.), Hightec-Kunststoffe, odgl. verarbeitbar sind.

## Beschreibung

### Stand der Technik

Die Erfindung geht aus von einem Schweißschuh für einen Kunststoffschweißextruder, nach der Gattung des Anspruchs 1, einem Kunststoffschweißextruder, nach der Gattung des Anspruchs 7, und von einem Verfahren zur Erzeugung einer Kunststoffschweißnaht mittels eines Kunststoffschweißextuders, nach der Gattung des Anspruchs 10.

Kunststoffschweißen ist heutzutage ebenso weit verbreitet wie das Schweißen von Metallen. Hierzu werden Kunststoffschweißextruder verwendet, die mit einer Eigenluftversorgung oder mit einem Frerndluftanschluss ausgestattet sind. Der Antrieb des Kunststoffschweißextruders erfolgt über einen Elektromotor. Über einen Drahteinzug wird das Schweißmaterial (Schweißdraht, Granulat), das in der Regel Polyethylen (PE), Polypropylen (PP), Polyvinylidenfluorid (PVDF) oder Polyvinylchlorid (PVC) ist, der Extruderschnecke zugeführt und von dieser granuliert. Danach drückt die Extruderschnecke das Granulat in die Schmelzkammer, in der es zu einer homogenen Masse aufgeschmolzen wird, um anschließend aus der Extruderdüse auszutreten. Gleichzeitig werden die Fügeteile durch die Warmluft auf Schweißtemperatur gebracht. Durch Aufbringung des plastifizierten Schmelzgutes auf die Ftigeteile wird mittels des Schweißschuhes die Schweißnaht gebildet. In Abhängigkeit der Schweißnaht (Kehl-, X-, Folien-, V-, Ecknaht, odgl.) kommen unterschiedliche durch die Schweißnahtgeometrie angepasste Schweißschuhe zum Einsatz.

Es gehören unterschiedliche Materialien, aus denen der Schweißschuh gefertigt wird, zum Stand der Technik. Da Schweißschuhe aus Metall aufgrund der zu hohen Wärmeleitfähigkeit als nachteilig erachtet werden, ist man mittlerweile dazu übergegangen Schweißschuhe ganz oder teilweise aus Polytetrafluoraethylen (PTFE, Teflon) zu fertigen. Nachteilig ist allerdings, dass durch die Verwendung von Teflon die maximale Massetemperatur auf ca. 270°C beschränkt ist, sodass hochfluorierte Kunststoffe (PTFE (Teflon), odgl.), Hightec-Kunststoffe, odgl. nicht verarbeitet werden können. Zusätzlich unterliegt Teflon mit der Zeit einem Verschleiß, sodass der Schweißschuh ausgewechselt werden muss.

In der Regel bestehen die Bauteile des Kunststoffschweißextruders, die mit dem Schweißdraht, dem Granulat und/oder dem Schmelzgut in Berührung kommen, aus Metall. Nachteilig ist allerdings, dass Kunststoffe, wie z. B. Polyvinylchlorid (PVC), bei ihrer Erhitzung chemisch aggressive Stoffe, wie z. B. Salzsäuredämpfe, freisetzen, die das Material dieser Bauteile angreifen und damit die Lebensdauer dieser Bauteile verringern. Zusätzlich kommt es zu einer Bildung einer Oxidschicht, deren abrassiver Abtrag in die Schweißnaht gelangen kann, wodurch eine qualitativ minderwertige Schweißnaht entsteht.

### Die Erfindung und ihre Vorteile

Der erfindungsgemäße Schweißschuh für einen Kunststoffschweißextruder, mit dem kennzeichnenden Merkmal des Anspruchs 1, der erfindungsgemäße Kunststoffschweißextruder, mit dem kennzeichnenden Merkmal des Anspruchs 7, und das erfindungsgemäße Verfahren zur Erzeugung einer Kunststoffschweißnaht mittels eines Kunststoffschweißextuders, mit dem kennzeichnenden Merkmal des Anspruchs 10, haben demgegenüber den Vorteil, dass als Werkstoff Keramik verwendet wird. Besteht der erfindungsgemäße Schweißschuh aus Keramik, so unterliegt er nahezu keinem Verschleiß und es bleiben keine geschmolzenen Kunststoffreste an ihm hängen. Beim erfindungsgemäßen Kunststoffschweißextruder, dessen Fördereinrichtung, Gehäuse der Fördereinrichtung, Schmelzkammer, Schweißschuh und/oder Düseneinrichtung mindestens teilweise aus Keramik ist, dient die Keramik zur Vermeidung von Verunreinigungen des Schmelzgutes bei dem ansonsten herkömmlichen Verfahren. Zusätzlich ist durch die Keramik eine Erhöhung der Massetemperatur möglich, sodass auch hochfluorierte Kunststoffe (PTFE (Teflon), FEP (Hexafluorpropylen-Copolymer), PFA (Perfluoro-Alkoxyalkan), odgl.), Hightec-Kunststoffe, odgl. verarbeitbar sind.

Nach einer vorteilhaften Ausgestaltung des erfindungsgemäßen Schweißschuhes ist die Keramik Ingenieurkeramik.

Nach einer zusätzlichen vorteilhaften Ausgestaltung des erfindungsgemäßen Schweißschuhes ist der Werkstoff des Schweißschuhes Aluminiumtitanat (Al₂TiO₅).

Nach einer zusätzlichen vorteilhaften Ausgestaltung des erfindungsgemäßen Schweißschuhes ist der Werkstoff des Schweißschuhes teilstabilisiertes Zirkonoxyd (ZrO₂₄TzP).

Nach einer zusätzlichen vorteilhaften Ausgestaltung des erfindungsgemäßen Schweißschuhes ist der Werkstoff des Schweißschuhes Siliziumcarbid (SiC).

Nach einer zusätzlichen vorteilhaften Ausgestaltung des erfindungsgemäßen Schweißschuhes ist durch die Verbindungsvorrichtung der Schweißschuh lösbar vom Kunststoffschweißextuder. Dadurch kann der Schweißschuh in Abhängigkeit der notwendigen Schweißnahtgeometrie einfach und schnell ausgetauscht werden.

Nach einer vorteilhaften Ausgestaltung des erfindungsgemäßen Kunststoffschweißextruders ist die Keramik Ingenieurkeramik.

Nach einer zusätzlichen vorteilhaften Ausgestaltung des erfindungsgemäßen Kunststoffschweißextruders ist der Werkstoff siliziumgefülltes Siliziumcarbid (SiSiC). Der Vorteil dieses Werkstoffes liegt darin, dass er hart, beständig und bruchfest ist. Zusätzlich wird die geringe Wärmeleitfähigkeit des Siliziumcarbids durch eine hohe Wärmeleitfähigkeit des Siliziums ausgeglichen. Dies bewirkt, dass eine ideale Wärmeleitfähigkeit gegeben ist, sodass die Wärme der die Schmelzkammer umgebenden Band-Heizung optimal an das Schmelzmaterial weitergegeben werden kann.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung sind in der Zeichnung dargestellt und werden im Folgenden näher erläutert. Es zeigen:
- Fig. 1: eine Seitenansicht eines erfindungsgemäßen Kunststoffschweißextruders,
- Fig. 2: eine Aufsicht eines erfindungsgemäßen Kunststoffschweißextruders und
- Fig. 3: eine Detailansicht eines erfindungsgemäßen Kunststoffschweißextruders.
- Fig. 4: eine Seitenansicht eines erfindungsgemäßen Schweißschuhes,
- Fig. 5: eine Frontansicht eines erfindungsgemäßen Schweißschuhes und
- Fig. 6: eine Unteransicht eines erfindungsgemäßen Schweißschuhes.

### Beschreibung des Ausführungsbeispiels

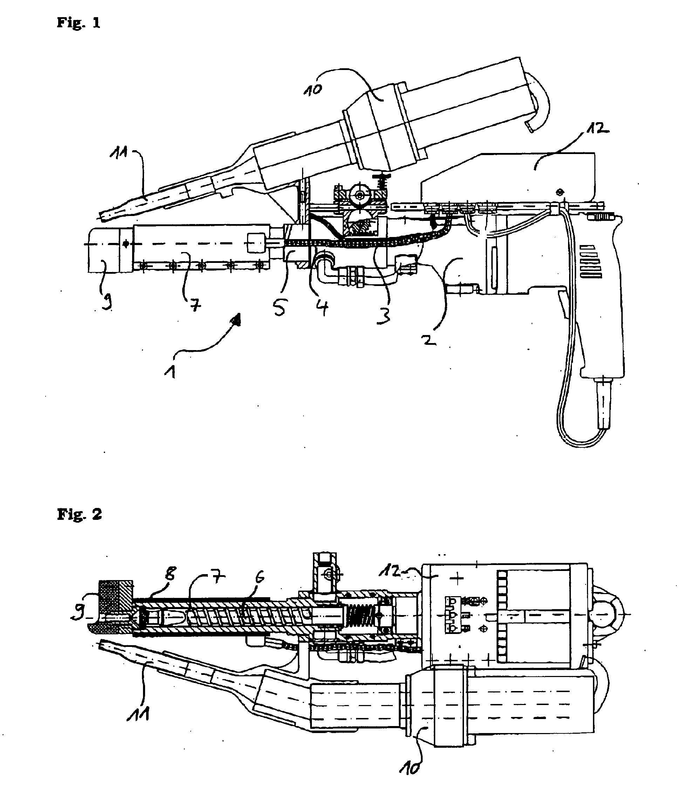

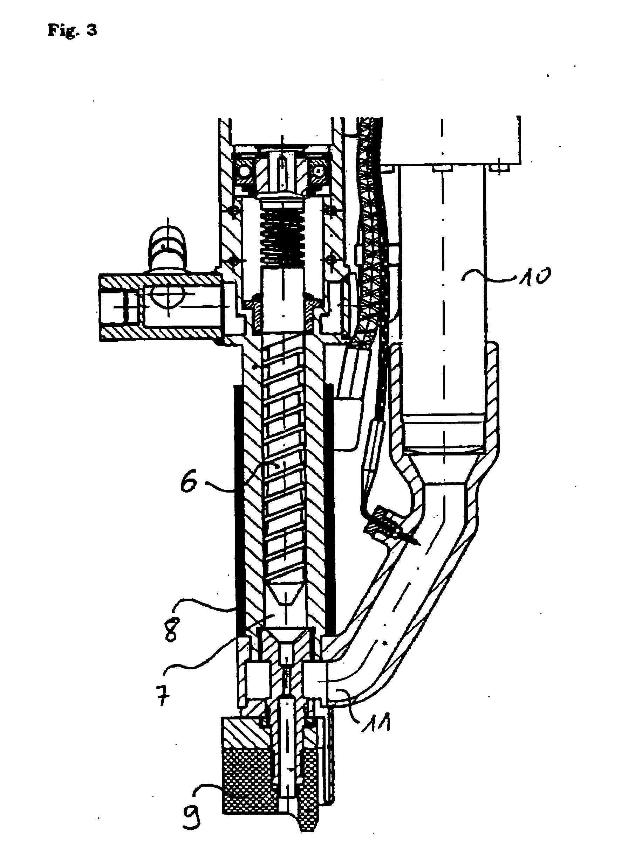

Fig. 1, Fig. 2 und Fig.3 zeigen eine Seitenan-, eine Aufsicht und eine Detailansicht eines erfindungsgemäßen Kunststoffschweißextruders 1. Dieser weist einen Antrieb 2 (Elektromotor) auf, der den Schweißdraht 3 (Granulat) über den Drahteinzug 4 in den Extruder 5 zieht. Durch die Fördereinrichtung 6, die im dargestellten Beispiel durch eine Extruderschnecke gebildet wird, wird der Schweißdraht 3 granuliert. In der Schmelzkammer 7 wird das Granulat aufgeschmolzen, wobei die dafür erforderliche Wärme durch eine Band-Heizung 8 erzeugt wird. Das Schmelzgut tritt durch den Schweißschuh 9, der erfindungsgemäß aus Keramik oder Ingenieurkeramik gefertigt ist, aus dem erfindungsgemäßen Kunststoffschweißextruder 1 aus und wird auf die nicht dargestellten Fügeteile aufgebracht. Zusätzlich werden die Fügeteile mittels eines Wärmegasgerätes 10, das durch Eigenluft oder Fremdluft versorgt wird, über eine Vorwärmdüse 11 erhitzt. Die Einstellungen (z.B. Massetemperatur) erfolgen über einen Regler 12.

Erfindungsgemäß ist die Fördereinrichtung 6, das Gehäuse der Fördereinrichtung 6, die Schmelzkammer 7, der Schweißschuh 9 und/oder die Vorwärmdüse 11 der Düseneinrichtung mindestens teilweise aus Keramik gefertigt, so dass keine Verunreinigungen in das Schmelzgut gelangen können.

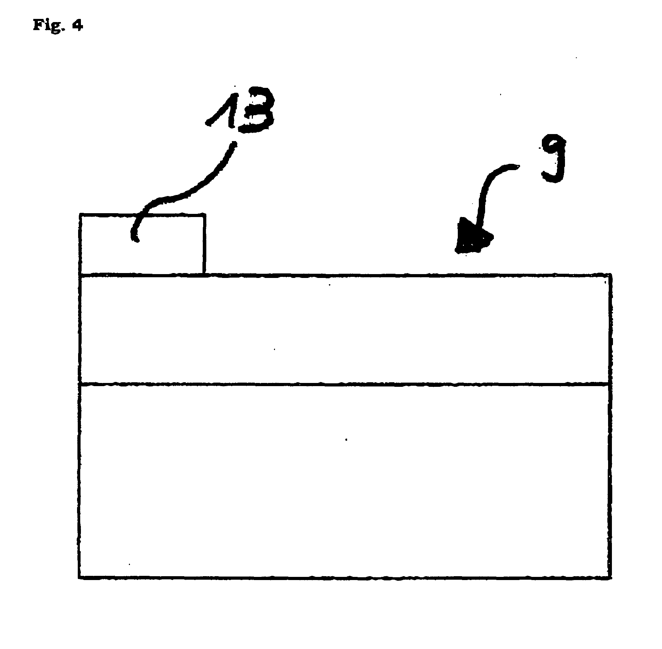

Fig. 4 zeigt eine Seitenansicht eines erfindungsgemäßen Schweißschuhes 9. Dieser weist eine Erhebung 13 (Nase) auf, die als Führung dient und in der durch die Fügeteile gebildete Fuge geführt wird. Zusätzlich hat die Erhebung 13 die Aufgabe den Austritt des Schmelzgutes zu begrenzen.

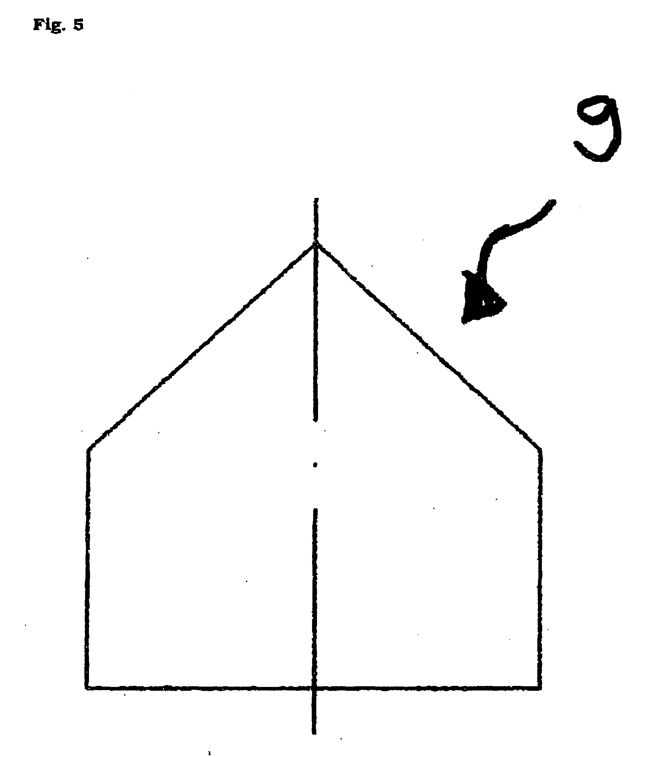

Fig. 5 zeigt eine Frontansicht eines erfindungsgemäßen Schweißschuhes 9. Die Oberflächengeometrie ist dazu geeignet, eine Kehlnaht zu erzeugen. Selbstverständlich sind auch andere Winkel und/oder Oberflächengeometrien denkbar, sodass der erfindungsgemäße Schweißschuh 9 für unterschiedliche Schweißnähte einsetzbar ist.

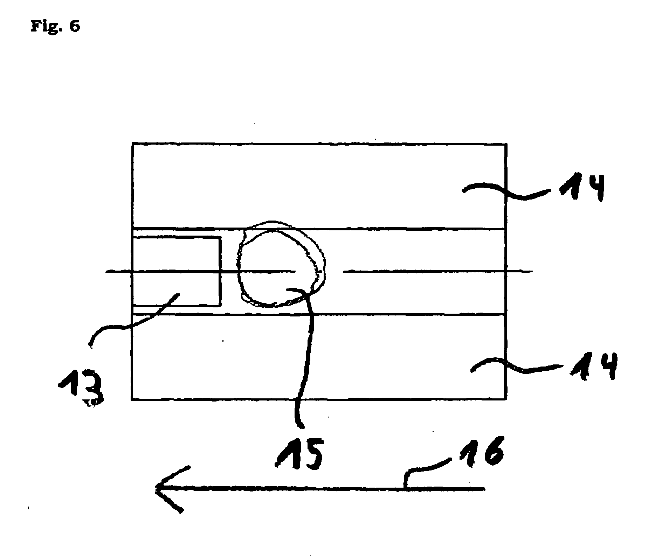

Fig. 6 zeigt eine Unteransicht eines erfindungsgemäßen Schweißschuhes 9. Durch die in der Fuge geführten Erhebung 13 gelangen die Flächen 14 in Kontakt mit den Fügeteilen, Das Schmelzgutes wird durch die Öffnung 15 und in die durch die Fugenteile gebildete Fuge gepresst und erhält durch die Bewegung des Kunststoffschweißextruders 1 in Bewegungsrichtung 16 und den erfindungsgemäßen Schweißschuh 9 die gewünschte Form. Durch die Erhebung 13 wird vermieden, dass das Schmelzgut in Bewegungsrichtung 16 austreten kann.

Alle hier dargestellten Merkmale können sowohl einzeln als auch in beliebiger Kombination miteinander erfindungswesentlich sein.

Bezugszahlenliste
- 1: Kunststoffschweißextruder
- 2: Antrieb
- 3: Schweißdraht
- 4: Drahteinzug
- 5: Extruder
- 6: Fördereinrichtung
- 7: Schmelzkammer
- 8: Band-Heizung
- 9: Schweißschuh
- 10: Wärmegasgerät
- 11: Vorwärmdüse
- 12: Regler
- 13: Erhebung
- 14: Fläche
- 15: Öffnung
- 16: Bewegungsrichtung

## Patentansprüche

1. Schweißschuh (9) für einen Kunststoffschweißextruder (1) zur Ausführung einer Schweißnaht (Kehl-, X-, Folien-, V-, Ecknaht, odgl.)
- mit einer Verbindungsvorrichtung zur Verbindung des Schweißschuhes (9) an einer das Schmelzgut entlassenden Öffnung des Kunststoffschweißextruders (1),
- mit mindestens einem Kanal zur Durchleitung des Schmelzgutes durch den Schweißschuh (9), wobei der Kanal mit der das Schmelzgut entlassenden Öffnung des Kunststoffschweißextruders (1) korrespondiert,
- mit mindestens einer Auslassöffnung (15) für das Schmelzgut und
- mit einer für die Schweißnaht erforderlichen Führung,
**dadurch gekennzeichnet,**
- **dass** der Werkstoff des Schweißschuhes (9) Keramik ist.

2. Schweißschuh (9), nach Anspruch 1,
**dadurch gekennzeichnet,**
**dass** die Keramik Ingenieurkeramik ist.

3. Schweißschuh (9), nach Anspruch 1 oder Anspruch 2,
**dadurch gekennzeichnet,**
**dass** der Werkstoff des Schweißschuhes (9) Aluminiumtitanat (Al₂TiO₅) ist.

4. Schweißschuh (9), nach Anspruch 1 oder Anspruch 2,
**dadurch gekennzeichnet,**
**dass** der Werkstoff des Schweißschuhes (9) teilstabilisiertes Zirkonoxyd (ZrO₂₁TzP) ist.

5. Schweißschuh (9), nach Anspruch 1 oder Anspruch 2,
**dadurch gekennzeichnet,**
**dass** der Werkstoff des Schweißschuhes (9) Siliziumcarbid (SiC) ist.

6. Schweißschuh (9), nach einem der vorhergehenden Ansprüche,
**dadurch gekennzeichnet,**
**dass** durch die Verbindungsvorrichtung der Schweißschuh (9) lösbar vom Kunststoffschweißextuder (1) ist.

7. Kunststoffschweißextruder (1),
- mit einer Schmelzmaterial schmelzenden Schmelzkammer (7),
- mit einem Antrieb (2) für eine in einem Gehäuse befindlichen Fördereinrichtung (6, Extruderschnecke) zur Zuführung des Schmelzmaterials (Schweißdraht (3), Granulat) in die Schmelzkammer (7),
- mit einem Schweißschuh (9) zur schweißnahtbildenden Ausbringung des Schmelzgutes auf zu verschweißende Fügeteile und
- mit einer Düseneinrichtung, die zur Erwärmung der Fügeteile mittels eines gasförmigen Mediums durchströmbar ist,
**dadurch gekennzeichnet,**
- **dass** der Werkstoff der Fördereinrichtung (6), des Gehäuses der Fördereinrichtung (6), der Schmelzkammer (7), des Schweißschuhes (9) und/oder der Düseneinrichtung mindestens teilweise Keramik ist.

8. Kunststoffschweißextruder (1), nach Anspruch 7,
**dadurch gekennzeichnet,**
**dass** die Keramik Ingenieurkeramik ist.

9. Kunststoffschweißextruder (1), nach Anspruch 7 oder Anspruch 8,
**dadurch gekennzeichnet,**
**dass** der Werkstoff siliziumgefülltes Siliziumcarbid (SiSiC) ist.

10. Verfahren zur Erzeugung einer Kunststoffschweißnaht mittels eines Kunststoffschweißextuders (1),
**dadurch gekennzeichnet,**
**dass** insbesondere zur Vermeidung von Verunreinigungen des Schmelzgutes bei dem ansonsten herkömmlichen Verfahren ein Kunststoffschweißextuder (1) verwendet wird, dessen Fördereinrichtung (6), Gehäuse der Fördereinrichtung (6), Schmelzkammer (7), Schweißschuh (9) und/oder Düseneinrichtung mindestens teilweise Keramik ist.

11. Verfahren zur Erzeugung einer Kunststoffschweißnaht mittels eines Kunststoffschweißextuders (1), nach Anspruch 10,
**dadurch gekennzeichnet,**
**dass** die Keramik Ingenieurkeramik ist.
